# EUROPEAN PATENT SPECIFICATION

(11) **EP 3 480 084 B1**
(45) Date of publication and mention of the grant of the patent: **14.07.2021**
(21) Application number: 18201421.7
(22) Date of filing: 19.10.2018
(51) Int. Cl.: B62D 21/15, B62D 33/06, B62D 33/067

(54) **A CAB ASSEMBLY**
ANORDNUNG EINES LKW-FAHRERHAUSES
ENSEMBLE CABINE

(30) Priority: 03.11.2017 TR 201717177
(43) Date of publication of application: 08.05.2019
(73) Proprietor: Ford Otomotiv Sanayi Anonim Sirketi, 34885 Sancaktepe/Istanbul (TR)
(72) Inventor: YILDIRIM, Ali Can, ISTANBUL (TR); ARIK, Haluk, ISTANBUL (TR)
(74) Representative: Dericioglu, E. Korhan

(56) References cited:
- WO-A1-2016/041590
- JP-A- H11 240 463
- US-A1- 2009 315 311
- US-A1- 2016 046 326
- US-B2- 8 985 630

## Description

### Technical Field

The present invention relates to a cab assembly which is to use for driver's cabs of heavy commercial vehicles and provides to dampen a portion of the energy generated when the cab is subjected to an impact.

### Prior Art

Load carrier vehicles are divided into three separate classes; light (LCV), medium (MCV) and heavy commercial vehicles (HCV) according to their load carrying capacities. Although in light commercial vehicles among these vehicles the cabin where the driver is located in the same area with the cargo carried, in the vehicles carrying medium and heavy loads, the cab and the area where the cargo is carried are separated from each other. In such vehicles, an extra cabin is designed for the driver and passengers, and the cargo and the driver are completely separated from each other. These cabins are equipped with many different comfort and safety features for the comfort and safety of the driver. One of these features is the cabin suspension formed only for the comfort and safety of the driver, which is designed different from the suspension system found in the vehicle. The cabine suspension as different from the suspension which is present in the vehicle forms an extra suspension increasing the drive comfort. In such suspension systems there are also cabine stabilizer rods used to increase the tipping resistance. The said stabilizers are laterally connected to the two ends of the cab and to the vehicle chassis, thereby limiting the relative movement of the cab to the vehicle. Thanks to this limitation, the tilt angle of the vehicle is decreased for the sake of driver's safety and comfort, when the vehicle turns the bends with high speed. The said suspension systems as well as the stabilizer rod are linked to the chassis by means of a tower bracket.

Nowadays, vehicle crash tests have been carried out to measure the response of vehicles in the event of an accident before they are introduced to the market. In these tests, traffic accidents under normal traffic conditions are simulated. However, for heavy commercial vehicles serving for freight transportation, front crash tests are carried out. The elements in the commercial vehicles, which perform heavy freight transportation, are designed mainly according to general driving rules and to the criteria which will provide some standarts. Heavy commercial vehicles are expected to be capable of meeting the forces and stresses that will occur during a possible accident. New crash tests with higher energy (in values of 55 kJ and 29.3 kJ) with respect to the former tests are expected to be carried out in the recently defined standarts. During these tests, reaction formers defined in the standarts crash the front of the cab with energies defined again in the standarts. The cab tends during the test to go backwards and/or to move angularly, thereby being deformed. The chassis and cab cooperate during the crash but one of them is subjected to deformation and to be forced if the other one is more resistant and stable. According to the standards, there must be a sufficient living space in the cab, in which the driver is not harmed after the collision. A rigid behavior of the vehicle chassis causes the cab to deform more. However, this fact puts the criterion of the driver's living space at risk. Instead of this, a chassis or chassis part that can deform and de-energize will relax and eliminate the risk in the sense of deformation.

In the cab front suspension systems, a tower bracket and a bolt that connects the tower bracket to the vehicle chassis are used. In the tower bracket, for the bolt a bolt hole is arranged in a such size through which only the bolt can pass. In this case, when a force is applied to the cabine, the chassis and the tower bracket show a rigid behavior and therefore deformations occur in the cabine.

In the European patent document EP0972700 (A2) according to the prior art, front supporters for the tiltable truck cabs are described. In the prior art document, the cab is fixed to the two connecting brackets on its front side, which are hinged to the two spring legs to temporarily stop the cab relative to the chassis. The cab is also directed and hinged onto the U-shaped stabilizer. The rear ends of the stabilizer are hinged to the bearing blocks mounted to the chassis frame. The bearing blocks are fixed onto the frame and / or placed in the frame, thus the parts can deforme during frontal crash. The stopper arm arranged on the rear bearing block is deformed and rests on the bolt connection in order to keep the lower bolt connection of the bearing block in place during the collision. When the document of the prior art is compared to the present invention, in the prior art document is provided an element on the tower bracket of the front cab suspension of the trucks, which is intended to protect the bolt connection during the collision. However, the invention according to the application differs from the prior art document because the bolt connection is placed in a separate bolt hole, thereby performing a shock absorbing function.

In the German patent document DE102008003488 (A1) according to the state of the art, a heavy commercial vehicle is described, which has two side framework elements for vehicle chassis having deformation ranges causing an uncontrolled application of energy by accident. In the prior art document, there are structure elements and every side structure element is fastenable at an assigned structure side member. The corresponding bearing support of the cab is supported on the side frame elements. The frame elements have deformation ranges. The deformation ranges are deformed by an applied force with uncontrolled energy depending on an accident. In the document according to the prior art, the deformation zones are preferably formed by a weakining, especially by a recess or the like in the corresponding frame element. In this wise, deformation zones are provided and their deformation and energy absorption capacities are ensured by sizing with slots and similar ways. When the document according to prior art is compared with the present invention, the invention and the document attempt to solve the problem of the damping of the load acting on the truck cabin suspension bracket as a result of the collision. However in the present invention, the bolt dampens the loads exerted on it, by being inserted into other slot on the bracket next to the bolt connection at the moment of an accident, whereas in the prior art document it is intended to dampen the energy by deformation easily against the moment exerted between the column, to which the bracket is connected and the bracket. In this regard, the present invention differs from the prior art.

In the United States patent document US4735272 (A) according to the prior art, a front suspension arrengement for vehicles having cabs is disclosed. The prior art document relates to at least one spring means for forward bufferable cab suspension as well as to an arrengement for suspension of a motion blocker arranged between a cab and frame. The said spring means are adapted to absorb the swingings of cabs and the blocker is adapted to limit the vertical movement of the cabin with the frame. The prior art document differs with respect to a support mounted individually to the cab supporting parts of both the spring device and the movement barrier and to the fact that the support arrengement of the movement blocker is located before the support assembly of the spring. In the prior art document, there is a bracket which is also available in the present invention, but the absorbing function achieved by the arrengment made for bolt connections on the bracket, when a load is applied onto the bracket, does not exist in the prior art document. In this regard, the present invention and the prior art document are different.

International Patent documents numbered WO2016041590A1 discloses a cab over engine truck having a frame, a cabin mounted on the frame, air suspension cylinders mounted to the beams of the frame, an anti-rollbar mounted and supported by two towers which are fixed to the frame and two opposite arms which are connected to the anti-rollbar. In one embodiment of the invention, at the ends opposite to the anti-rollbar, the arms are provided with pins which are received in a hole in the outer wall of the towers. There are elongated slots disposed adjacent to the holes in the outer wall of the towers such that a narrow strip of the outer wall remains between the holes and elongated slots. The strength of these narrow strips between holes and elongated slots is arranged such that the narrow strips break when the force between cabin and frame exceeds the threshold force. After breaking of the narrow strips, the pins of the arms can slide along the elongated slots. Once the pins reach the ends of the elongated slots opposite to the holes the second phase of the collision with low force transfer is completed.

United States patent document numbered US20090315311A1 discloses a front portion structure of a vehicle having an upper radiator support and a lower left radiator support which are mounted to a right-side member and left side member via a right upper bracket, a left upper bracket, a right lower bracket and a left lower bracket. Each of the brackets has horizontal plate and a rising plate. A fixing hole, a fastening hole, a release hole and a guide hole connecting the fastening hole and release hole to each other are formed in the horizontal surface of the bracket. The radiator supports and are attached to the side members via the brackets by fixing the bolts to the side members and by screwing nuts onto the bolts, wherein the fastening holes and the fixing holes have a smaller diameter than the head portions of the bolts, the release holes have a larger diameter than the head portions of the bolts, and the width of the guide holes is larger than the diameter of the threaded portions of the bolts but smaller than the diameter of the head portions.

In the present invention, there is a deformable channel at the lower side of the bolt hole and another slot below it in which the bolt can sit after relative motion. Thanks to the new channel and slot, a chassis is achieved which is deformable following an accident/collision test and as a result, the cab deformation is reduced and the risk for the criterion of driver's living space is eliminated.

### Objects of the Invention

The object of the present invention is to realize a cab assembly that absorbs a portion of the collision energy generated in the event of an accident.

Another object of the present invention is to realize a cab assembly, which absorbs the energy that is generated in the event of a collision thanks to its channels and slots.

### Brief Description of the Invention

A cab assembly as defined in the first claim and the dependent claims to realize the object of the present invention comprises basically a chassis, a cabine stabilizer rod, a suspension and a tower bracket. The tower bracket mentioned in this embodiment of the invention though comprises a first slot, a second slot and a channel in the first connection region. The tower bracket also is subjected to rotate around the central axis of the bolt slot clockwise, when a force is applied to tower bracket by means of the cab stabilizer rod. In this case, also the connecting element in the first slot tends to move against the second slot and thus it is forced to pass through the channel formed between the first slot and the second slot. In this process of strain, a part of the force applied to cab is damped. In this case, increase of the energy absorbability capacity of the chassis section contributes to the strain and deformation of the cab positively.

### Detailed Description of the Invention

A cab assembly to achieve the object of the present invention is illustrated in the attached figures, wherein:

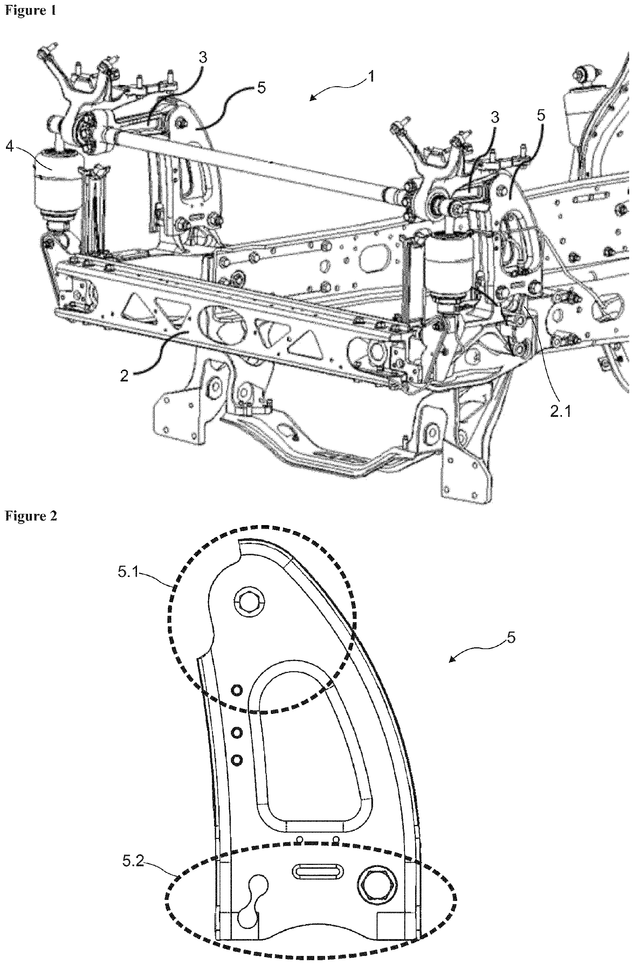

**Figure 1** is a perspective view of a cab assembly.
**Figure 2** is a side view of the tower bracket.

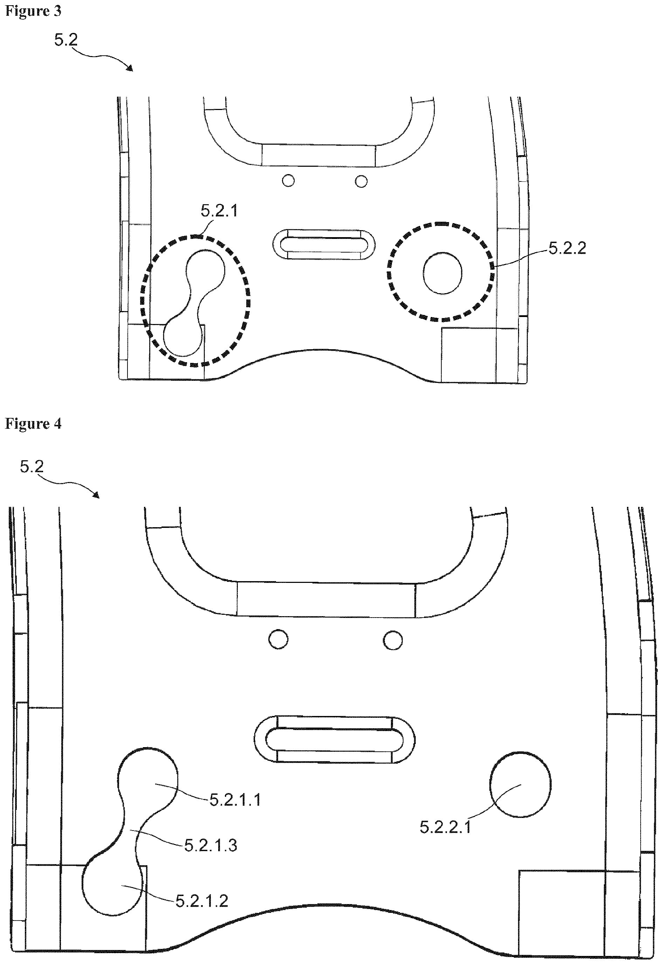

**Figure 3** is a side view of the lower connection region.
**Figure 4** is a zoomed side view of the lower connection region.

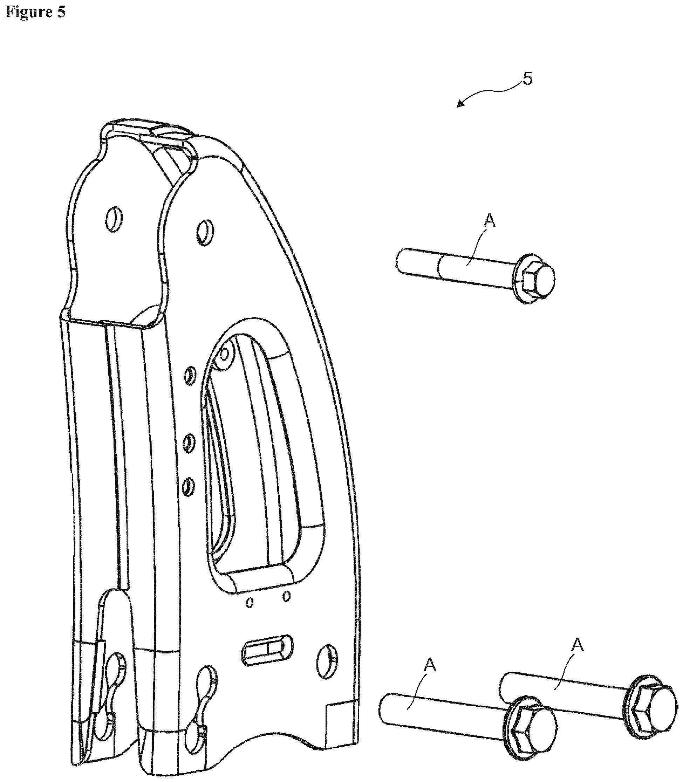

**Figure 5** is an exploded perspective view of the connecting elements in the tower bracket with the tower bracket.

The parts in the drawings are numbered individually and the corresponding numbers are given below.
**1.** A cab assembly
**2.** Chassis
   **2.1.** Extension
**3.** Cab stabilizer rod
**4.** Suspension
**5.** Tower bracket
   **5.1.** Upper connection region
   **5.2.** Lower connection region
      **5.2.1.** First connection area
         **5.2.1.1.** First slot
         **5.2.1.2.** Second slot
         **5.2.1.3.** Channel
      **5.2.2.** Second connection area
         **5.2.2.1.** Bolt slot

### A. Connecting element

A cab assembly (1) used in cabs of heavy commercial vehicles and provides to dampen a portion of the energy generated when the cab is exposed to an impact, comprises basically;
- the cab and at least one chassis (2) supporting the main structure,
- at least one cab stabilizer rod (3) keeping the tilting angle of the cab at a minimum value during turning a bend of the vehicle,
- at least one suspension (4), which absorbs the vibrations induced by the road without transmitting them to cab,
- a tower bracket (5) linked at its one side to the chassis (2) and to the cab stabilizer rod (3) related with the suspension (4) at its other side, which dampens the movement of the cab stabilizer rod (3) and the force exerted through it, when a sudden force is applied to the cab from any direction and on which at least one rounded first slot (5.2.1.1), at least one rounded second slot (5.2.1.2) and at least one channel (5.2.1.3) is opened, comprises,
   - the first slot (5.2.1.1) on that side which is close to the chassis (2) relative to the cab stabilizer rod (3) (5.2.1.1)
   - the second slot (5.2.1.2) is linked to the first slot (5.2.1.1) by the channel (5.2.1.3) which has a smaller size than the diameter of the first slot (5.2.1.1), wherein the second slot (5.2.1.2) has the same diameter as the first slot (5.2.1.1),
   - the channel (5.2.1.3) which exerts a force against the direction of movement of a connecting element (A) due to its size during movement of the connecting element (A) from the first slot (5.2.1.1) to the second slot (5.2.1.2 ) when a force is exerted by cab stabilizer (3) on the tower bracket (5) and thereby enforcing the passage of the connecting element (A) and absorbing the impact energy partially.

In the cab assembly (1) according to an embodiment of the invention, tehre is at least a chassis (2). The said chassis (2) is in the form of a framework of the heavy commercial vehicle and carries the cab and the trailer. The chassis (2) is also linked with the wheels via the axle. The chassis (2) has an extension (2.1) that is preferably formed for mounting the tower bracket (5). In this embodiment of the invention, there are preferably two extensions (2.1), wherein the tower bracket (5) is mounted to said extensions (2.1) by fitting. In the driver's cab assembly in this embodiment of the invention, there is a cab stabilizer rod (3). The said cab stabilizer rod (3) allows the cab to be subjected to centrifugal forces at minimum levels during cornering of the vehicle. In other words, the cab stabilizer rod (3) keeps the tilting angle of the cab at minimum value during cornering of the vehicle. The cab stabilizer rod (3) is connected on its one side to the suspension (4). The suspension (4) is formed to minimize the exposure of the cab to the vibrations due to the road. The suspension (4) dampens the vibrations because of the rough road conditions and provides to keep the comfort of the cab as well as fof the passengers in the cab in this way at a maximum level.

In a cab assembly (1) according to an embodiment of the invention, the connection of the chassis (2) to the stabilizer rod (3) and to the suspension (4) is provided by means of a tower bracket (5). Said tower bracket (5) is mounted to the chassis (2) on one side and to the cab stabilizer rod (3) on the other side. The tower bracket (5) as such serves as a bracket which forms a connection between the cab stabilizer rod (3) and the chassis (2). The tower bracket (5) in this embodiment of the invention preferably consists of an upper connection region (5.1) and a lower connection region (5.2). Tower bracket (5) is mounted to cab stabilizer rod (3) from the upper connection region (5.1) and to the chassis (2) from the lower conneciton region (5.2). As mentioned above, there are two extensions (2.1) on the chassis (2). The lower connection region (5.2) of the tower bracket (5) is fitted on the said extensions (2.1) and preferably, each of the tower bracket (5) and the chassis (2) are fixed to each other by means of a connecting element (A). Likewise, the upper connection region (5.1) is fixed to the cab stabilizer rod (3) by means of a connecting element (A). In this embodiment of the invention, there is a first connection area (5.2.1) and also a second connection area (5.2.2) in the lower connection region (5.2). Said first connection area (5.2.1) and the second connection area (5.2.2) are preferably located on the same axis relative to the ground plane. First connection area (5.2.1) in this embodiment of the invention is on the side which is closer to the suspension (4), however the second connection area (5.2.2) is on the side, which is more distal to the suspension (4). One of the extensions (2.1) in this embodiment of the invention is vertically aligned with the first connection area (5.2.1) and the other one is vertically aligned with the second connection area (5.2.2).

In the first connection area (5.2.1) in a cab assembly according to this embodiment of the invention, there is a first slot (5.2.1.1), a second slot (5.2.1.2) and a channel (5.2.1.3) arranged between the first slot (5.2.1.1) and the second slot (5.2.1.2) and the size of which is smaller than the diameters of the first slot (5.2.1.1) and the second slot (5.2.1.2). The first slot (5.2.1.1) in this embodiment of the invention is preferably opened to position the tower bracket and maintain the said position of the tower bracket (5) that was formed to provide the connection of chassis (2) and cab stabilizer rod (3). A connecting element (A) is passed through the first slot (5.2.1.1) and the tower bracket (5) and the extension (2.1) are rigidly secured to each other by means of said connecting element (A). In this embodiment of the invention there is a second slot (5.2.1.2) located close to the first slot (5.2.1.1) and opened preferably angularly to the first slot (5.2.1.1). Said second slot (5.2.1.2) was opened such that it will be closer to the chassis (2) and and suspension (4) relative to the first slot (5.2.1.1). In this embodiment of the invention, the angle between the axis passing through the center points of first slot (5.2.1.1) and second slot (5.2.1.2) and the ground plane is seventy degrees. The said angle is formed in this way because the tower bracket (5) tends to rotate around the central axis of the bolt slot (5.2.2.1) in the event of an impact. In different embodiments of the invention different angle sizes can be formed, whereby the locations of first slot (5.2.1.1) and second slot (5.2.1.2) can be changed as preferred. The diameters of first slot (5.2.1.1) and second slot (5.2.1.2) are almost same. A channel (5.2.1.3) is opened between the first slot (5.2.1.1) and the second slot (5.2.1.2). Said channel (5.2.1.3) is opened so that its size is smaller than the diameters of the first slot (5.2.1.1) and the second slot (5.2.1.2). The length of channel (5.2.1.3) is as much as the distance between the first slot (5.2.1.1) and the second slot (5.2.1.2). As the distance between the first slot (5.2.1.1) and the second slot (5.2.1.2) is increased, the length of the channel (5.2.1.3) and as a matter of course the amount of energy to be damped can be increased. The main reason for the fact that the opening of the channel (5.2.1.3) is smaller than the diameter of the first slot (5.2.1.1) and the second slot (5.2.1.2) is the forcing of connecting element (A) in the process of progressing from the first slot (5.2.1.1) to the second slot (5.2.1.2) and thus damping the energy. In this embodiment of the invention, there is a bolt slot (5.2.2.1) in the second connection area (5.2.2). A connecting element (A) is passed through the said bolt slot (5.2.2.1) and by means of this connecting element (A) the other extension (2.1) and tower bracket (5) are linked together.

In the event of a force being applied in any direction to the cab, this force also acts on the tower bracket (5) by means of the cab stabilizer rod (3). In order to reduce the deformation of the cab due to said force to some extent, a first slot (5.2.1.1), a second slot (5.2.1.2) and a channel (5.2.1.3) are formed in the first connection area (5.2.1) of the tower bracket (5). In the event of a force being exerted to the cab, the connecting element (A), which is seated in the first slot (5.2.1.1), tends to move towards the second slot (5.2.1.2) and it meets with the channel (5.2.1.3) during this process. The connecting element (A) encounters a resistance during its progression from the first slot (5.2.1.1) to the second slot (5.2.1.2) because the size of the channel (5.2.1.3) opening is smaller than the first slot (5.2.1.1) and the connecting element (A). This resistance absorbs a portion of the impact energy that the cab has due to the applied force and thus reduces the effect of impact on the cab.

The operation of a cabinet assembly (1) in an embodiment of the invention is realized as follows. In heavy cargo transportation, serious fatalities are usually experienced as a result of a frontal collision. For this reason, it is supremely important to keep the safety of the cab at a maximum level. In the event of a frontal crash, the impact energy is transmitted via cab and suspension (4) and damped. During the damping of the crash energy the cab and the chassis work simultaneously and a poriton of the total energy is transferred to cab side and the remaining portion is transmitted to chassis (2) via suspension (4). Said crash energy applies force to a plurality of components after the first contact with the cab and is finally transferred to tower bracket (5) via cab stabilizer rod (3). In the event of acting a frontal force to the vehicle, the cab tends to move backwarts, while this force is transferred to tower bracket (5) at the same time. At that moment the tower bracket (5) is forced due to the force applied by cab stabilizer rod (3), to rotate clockwise around the center axis of the bolt slot (5.2.2.1) found in the second connection area (5.2.2). In this case, this force acts on the connecting element (A) in the first slot (5.2.1.1). The connecting element (A) in the first slot (5.2.1.1) tends to progress into second slot (5.2.1.2) due to this effect. This fact causes a shear stress in the first slot (5.2.1.1) of the tower bracket (5) due to the connecting element (A) in the first connection area (5.2.1) and the tower bracket (5) is strained in this sense. If the force acting on the cab is greater than this strain force, the connecting element (A) in the first slot (5.2.1.1) moves towards the second slot (5.2.1.2), deforms the channel (5.2.1.3) that is between the first slot (5.2.1.1) and the second slot (5.2.1.2), causes a damping of the energy during this deformation. The connecting element (A) is seated in the second slot (5.2.1.2) after it deformed said channel (5.2.1.3) and absorbs a portion of deformation force that can possibly act on the cab in this way. Increasing of the energy absorbing capacity of the chassis (2) section contributes positively to the strain and deformation of the cab.

By changing of the diameters of the first slot (5.2.1.1) and the second slot (5.2.1.2) as well as the connecting element (A) or by changing the size of the channel (5.2.1.3) gap in a cab assembly, the damping of the force exerted on the cab can be changed in a preferred amount.

## Claims

1. A cab assembly (1) used in cabs of heavy commercial vehicles and provides to dampen a portion of the energy generated when the cab is exposed to an impact, **comprising** basically;
- the cab and at least one chassis (2) supporting the main structure,
- at least one cab stabilizer rod (3) keeping the tilting angle of the cab at a minimum value during turning a bend of the vehicle,
- at least one suspension (4), which absorbs the vibrations induced by the road without transmitting them to cab,
- a tower bracket (5) linked at its one side to the chassis (2) and to the cab stabilizer rod (3) related with the suspension (4) at its other side, which dampens the movement of the cab stabilizer rod (3) and the force exerted through it, when a sudden force is applied to the cab from any direction and on which at least one rounded first slot (5.2.1.1), at least one rounded second slot (5.2.1.2) and at least one channel (5.2.1.3) is opened,
- wherein the second slot (5.2.1.2) is linked to the first slot (5.2.1.1) by the channel (5.2.1.3) which has a smaller size than the diameter of the first slot (5.2.1.1),
- wherein the tower bracket (5), that has a lower connection region (5.2) comprising a first connection area (5.2.1) on the side which is closer to the suspension (4) and a second connection area (5.2.2) on the side, which is more distal to the suspension (4),
**and characterized by**
• wherein the first connection area (5.2.1) which has the first slot (5.2.1.1), the second slot (5.2.1.2) and the channel (5.2.1.3) arranged between the first slot (5.2.1.1) and the second slot (5.2.1.2) and size of which is smaller than the diameter of the first slot (5.2.1.1) and the second slot (5.2.1.2),
• the first slot (5.2.1.1) on that side which is close to the chassis (2) relative to the cab stabilizer rod (3), and wherein the angle between the line formed by the axis passing through the center point of it and by the axis passing through the center point of second slot (5.2.1.2) and the ground plane is seventy degrees,
• wherein the second slot (5.2.1.2) has the same size as the first slot (5.2.1.1),
• the channel (5.2.1.3) which exerts a force against the direction of movement of a connecting element (A) due to its size during movement of the connecting element (A) from the first slot (5.2.1.1) to the second slot (5.2.1.2) when a force is exerted by cab stabilizer (3) on the tower bracket (5) and thereby enforcing the passage of the connecting element (A) and absorbing the impact energy partially.

2. The cab assembly (1) as in claim 1, **characterized by** the tower bracket (5), which is mounted to cab stabilizer rod (3) from the upper connection region (5.1) and to the chassis (2) from the lower conneciton region (5.2) and the lower connection region (5.2) of which is fitted to the extensions (2.1) on the chassis (2) by means of a connecting element (A).

3. The cab assembly (1) as in claim 1, **characterized by** the first slot (5.2.1.1) which is opened to position the tower bracket (5) and maintain the said position of the tower bracket that was formed to provide the connection of chassis (2) and cab stabilizer rod (3).

4. The cab assembly (1) as in claim 1, **characterized by** the second slot (5.2.1.2) which is opened in a section close to the first slot (5.2.1.1) such that it will be angularly closer to the chassis (2) and to the suspension (4) relative to the first slot (5.2.1.1).

5. The cab assembly (1) as in claim 1, **characterized by** the channel (5.2.1.3) which is arranged between the first slot (5.2.1.1) and the second slot (5.2.1.2) and which is formed with an opening smaller than the diameters of the first slot (5.2.1.1) and the second slot (5.2.1.2) and the length of which is as much as the distance between the first slot (5.2.1.1) and the second slot (5.2.1.2).

6. The cab assembly (1) as in claim 1, **characterized by** the tower bracket (5) which is forced to rotate clockwise around the central axis of the bolt slot (5.2.2.1) in the second connection area (5.2.2) due to a force applied by the cab stabilizer rod (3).

## Patentansprüche

1. Kabinenanordnung (1), die in Kabinen von schweren Nutzfahrzeugen verwendet wird und dafür sorgt, einen Teil der Energie zu dämpfen, die erzeugt wird, wenn die Kabine einem Aufprall ausgesetzt ist, **umfassend** grundsätzlich;
- die Kabine und mindestens ein Chassis (2), das die Hauptstruktur unterstützt,
- mindestens eine Kabinen-Stabilisatorstange (3), die den Kippwinkel der Kabine beim Abbiegen einer Kurve des Fahrzeugs auf einem Mindestwert hält,
- mindestens eine Suspension (4), die die von der Straße induzierten Schwingungen absorbiert, ohne sie auf die Kabine zu übertragen,
- eine Säulenstütze (5), die an ihrer einen Seite mit dem Chassis (2) und an ihrer anderen Seite mit der Kabinen-stabilisatorstange (3) verbunden ist, die mit der Suspension (4) zusammenhängt, die die Bewegung der Kabinen-stabilisatorstange (3) und die durch sie ausgeübte Kraft dämpft, wenn eine plötzliche Kraft aus einer beliebigen Richtung auf die Kabine einwirkt, und an der mindestens ein abgerundeter erster Schlitz (5.2.1.1), mindestens ein abgerundeter zweiter Schlitz (5.2.1.2) und mindestens ein Kanal (5.2.1.3) geöffnet ist,
- wobei der zweite Schlitz (5.2.1.2) mit dem ersten Schlitz (5.2.1.1) durch den Kanal (5.2.1.3) verbunden ist, der eine geringere Größe als der Durchmesser des ersten Schlitzes (5.2.1.1) aufweist,
- wobei die Säulenstütze (5), die einen unteren Verbindungsbereich (5.2) aufweist, einen ersten Verbindungsbereich (5.2.1) auf der Seite, die näher an der Suspension (4) ist, und einen zweiten Verbindungsbereich (5.2.2) auf der Seite, die weiter von der Suspension (4) entfernt ist, umfasst,
**und gekennzeichnet durch**
• wobei der erste Verbindungsbereich (5.2.1), der den ersten Schlitz (5.2.1.1), den zweiten Schlitz (5.2.1.2) und den zwischen dem ersten Schlitz (5.2.1.1) und dem zweiten Schlitz (5.2.1.2) angeordneten Kanal (5.2.1.3) aufweist und dessen Größe kleiner ist als der Durchmesser des ersten Schlitzes (5.2.1.1) und des zweiten Schlitzes (5.2.1.2)
• den ersten Schlitz (5.2.1.1) auf derjenigen Seite, die in Bezug auf die Kabinen-stabilisatorstange (3) nahe am Chassis (2) liegt, und wobei der Winkel zwischen der Linie, die durch die durch den Mittelpunkt desselben verlaufende Achse und durch die durch den Mittelpunkt des zweiten Schlitzes (5.2.1.2) verlaufende Achse gebildet wird, und der Grundebene siebzig Grad beträgt,
• wobei der zweite Schlitz (5.2.1.2) die gleiche Größe wie der erste Schlitz (5.2.1.1) aufweist,
• den Kanal (5.2.1.3), der aufgrund seiner Größe bei der Bewegung des Verbindungselements (A) vom ersten Schlitz (5.2.1.1) zum zweiten Schlitz (5.2.1.2 ) eine Kraft entgegen der Bewegungsrichtung des Verbindungselements (A) ausübt, wenn eine Kraft durch den Kabinenstabilisator (3) auf die Säulenstütze (5) ausgeübt wird, und dadurch den Durchgang des Verbindungselements (A) erzwingt und die Aufprallenergie teilweise absorbiert.

2. Kabinenanordnung (1) nach Anspruch 1, **gekennzeichnet durch** die Säulenstütze (5), die mit dem oberen Verbindungsbereich (5.1) an der Kabinen-stabilisatorstange (3) und mit dem unteren Verbindungsbereich (5.2) am Chassis (2) befestigt ist und deren unterer Verbindungsbereich (5.2) mittels eines Verbindungselements (A) an den Extensionen (2.1) am Chassis (2) angebracht ist.

3. Kabinenanordnung (1) nach Anspruch 1, **gekennzeichnet durch** den ersten Schlitz (5.2.1.1), der geöffnet wird, um die Säulenstütze (5) zu positionieren und die besagte Position der Säulenstütze beizubehalten, die gebildet wurde, um die Verbindung von Chassis (2) und Kabinen-stabilisatorstange (3) vorzusehen.

4. Kabinenanordnung (1) nach Anspruch 1, **gekennzeichnet durch** den zweiten Schlitz (5.2.1.2), der in einem Abschnitt nahe dem ersten Schlitz (5.2.1.1) geöffnet ist, so dass er relativ zum ersten Schlitz (5.2.1.1) winkelmäßig näher am Chassis (2) und an der Suspension (4) wird.

5. Kabinenanordnung (1) nach Anspruch 1, **gekennzeichnet durch** den zwischen dem ersten Schlitz (5.2.1.1) und dem zweiten Schlitz (5.2.1.2) angeordneten Kanal (5.2.1.3), der mit einer Öffnung ausgebildet ist, die kleiner ist als die Durchmesser des ersten Schlitzes (5.2.1.1) und des zweiten Schlitzes (5.2.1.2) und dessen Länge so groß ist wie der Abstand zwischen dem ersten Schlitz (5.2.1.1) und dem zweiten Schlitz (5.2.1.2).

6. Kabinenanordnung (1) nach Anspruch 1, **gekennzeichnet durch** die Säulenstütze (5), die durch eine von der Kabinen-stabilisatorstange (3) aufgebrachte Kraft zur Drehung im Uhrzeigersinn um die Mittelachse des Bolzenschlitzes (5.2.2.1) im zweiten Verbindungsbereich (5.2.2) gezwungen wird.

## Revendications

1. Ensemble de cabine (1) utilisé dans les cabines de véhicules commerciaux lourds et permettant d'amortir une partie de l'énergie générée lorsque la cabine est exposée à un impact, **comprenant** essentiellement;
- la cabine et au moins un châssis (2) supportant la structure principale,
- au moins une barre stabilisatrice de cabine (3) maintenant l'angle d'inclinaison de la cabine à une valeur minimale pendant le détour du véhicule,
- au moins une suspension (4), qui absorbe les vibrations induites par la route sans les transmettre à la cabine,
- un support de tour (5) relié d'un côté au châssis (2) et de l'autre côté à la barre stabilisatrice de cabine (3) liée à la suspension (4), qui amortit le mouvement de la barre stabilisatrice de cabine (3) et la force exercée par celle-ci, lorsqu'une force soudaine est appliquée à la cabine depuis n'importe quelle direction et sur laquelle se trouve au moins une première fente arrondie (5.2.1.1), au moins une deuxième fente arrondie (5.2.1.2) et au moins un canal (5.2.1.3) sont ouverts,
- dans lequel la deuxième fente (5.2.1.2) est reliée à la première fente (5.2.1.1) par le canal (5.2.1.3) qui a une taille plus petite que le diamètre de la première fente (5.2.1.1),
- dans lequel le support de tour (5), qui a une région de connexion inférieure (5.2) comprenant une première zone de connexion (5.2.1) sur le côté qui est plus proche de la suspension (4) et une deuxième zone de connexion (5.2.2) sur le côté qui est plus distal par rapport à la suspension (4),
**et caractérisé par**
• dans lequel la première zone de connexion (5.2.1) qui présente la première fente (5.2.1.1), la deuxième fente (5.2.1.2) et le canal (5.2.1.3) disposés entre la première fente (5.2.1.1) et la deuxième fente (5.2.1.2) et dont la taille est inférieure au diamètre de la première fente (5.2.1.1) et de la deuxième fente (5.2.1.2),
• la première fente (5.2.1.1) sur le côté qui est proche du châssis (2) par rapport à la barre stabilisatrice de cabine (3), et dans lequel l'angle entre la ligne formée par l'axe passant par le point central de celui-ci et par l'axe passant par le point central de la deuxième fente (5.2.1.2) et le plan de masse est de soixante-dix degrés,
• dans lequel la deuxième fente (5.2.1.2) a la même taille que la première fente (5.2.1.1),
• le canal (5.2.1.3) qui exerce une force contre la direction du mouvement d'un élément de connexion (A) en raison de sa taille pendant le mouvement de l'élément de connexion (A) de la première fente (5.2.1.1) à la deuxième fente (5.2.1.2) lorsqu'une force est exercée par le stabilisateur de cabine (3) sur le support de tour (5) et ainsi renforcer le passage de l'élément de connexion (A) et absorber partiellement l'énergie d'impact.

2. Ensemble de cabine (1) selon la revendication 1, **caractérisé par** le support de tour (5), qui est monté sur la barre stabilisatrice de cabine (3) à partir de la zone de connexion supérieure (5.1) et sur le châssis (2) à partir de la zone de connexion inférieure (5.2) et dont la zone de connexion inférieure (5.2) est montée sur les extensions (2.1) sur le châssis (2) au moyen d'un élément de connexion (A).

3. Ensemble de cabine (1) selon la revendication 1, **caractérisé par** la première fente (5.2.1.1) qui est ouverte pour positionner le support de tour (5) et maintenir ladite position du support de tour qui a été formé pour assurer la connexion du châssis (2) et de la barre stabilisatrice de cabine (3).

4. Ensemble de cabine (1) selon la revendication 1, **caractérisé par** la deuxième fente (5.2.1.2) qui est ouverte dans une section proche de la première fente (5.2.1.1) de sorte qu'elle sera angulairement plus proche du châssis (2) et de la suspension (4) par rapport à la première fente (5.2.1.1).

5. Ensemble de cabine (1) selon la revendication 1, **caractérisé par** le canal (5.2.1.3) qui est disposé entre la première fente (5.2.1.1) et la deuxième fente (5.2.1.2) et qui est formée avec une ouverture plus petite que les diamètres de la première fente (5.2.1.1) et de la deuxième fente (5.2.1.2) et dont la longueur est égale à la distance entre la première fente (5.2.1.1) et la deuxième fente (5.2.1.2).

6. Ensemble de cabine (1) selon la revendication 1, **caractérisé par** le support de tour (5) qui est forcé de tourner dans le sens des aiguilles d'une montre autour de l'axe central de la fente du boulon (5.2.2.1) dans la deuxième zone de connexion (5.2.2) en raison d'une force appliquée par la barre stabilisatrice de cabine (3).
